Europäisches Patentamt

European Patent Office

Office européen des brevets

(19)

(11) Veröffentlichungsnummer: **0 099 013**

**A2**

(12) ## EUROPÄISCHE PATENTANMELDUNG

(21) Anmeldenummer: **83106202.1**

(22) Anmeldetag: **25.06.83**

(51) Int. Cl.³: **H 04 B 3/06**

(30) Priorität: **14.07.82 DE 3226279**

(43) Veröffentlichungstag der Anmeldung:
**25.01.84 Patentblatt 84/4**

(84) Benannte Vertragsstaaten:
**AT BE CH DE GB IT LI LU NL**

(71) Anmelder: **Neumann Elektronik GmbH**
**Bülowstrasse 104 - 110**
**D-4330 Mülheim 1(DE)**

(72) Erfinder: **Neumann, Dirk, Dipl.-Ing.**
**Schemelsbruch 11**
**D-4330 Mülheim 1(DE)**

(74) Vertreter: **Feder, Heinz, Dr. et al,**
**Dominikanerstrasse 37**
**D-4000 Düsseldorf 11(DE)**

(54) Einrichtung zum Ausgleich unterschiedlichen Dämpfungsverhaltens von Fernmeldeleitungen.

(57) Eine Einrichtung zum Ausgleich unterschiedlichen Dämpfungsverhaltens in Fernmeldeleitungen, insbesondere von Fernverbindungsleitungen, bei der für jede Sprechrichtung ein steuerbarer Verstärker in einer Gabelverstärkerschaltung vorgesehen ist. Zwischen den Gabelschaltungen (G1, G2) der Gabelverstärkerschaltung ist ein Sensor vorgesehen, der auf das Einsetzen von Rückkopplungsschwingungen anspricht. Vom Sensor aus wird der Verstärkungsgrad in beiden Sprechrichtungen oder nur in der jeweils passiven Richtung derart gesteuert, daß er hochgesteuert wird, bis die Rückkopplungsschwingung einsetzt und dann wieder zurückgesteuert wird auf einen Wert der niedriger liegt als der Wert, bei dem die Rückkopplungsschwingung eingesetzt hat. Weiterhin kann gleichzeitig mit der Hochsteuerung der Verstärkung der Frequenzgang der Verstärker so beeinflußt werden, daß in der aktiven Sprechrichtung die hohen Frequenzen angehoben werden, während sie in der passiven Richtung abgesenkt werden.

FIG.1

- 7 -

Einrichtung zum Ausgleich unterschiedlichen Dämpfungsverhaltens von Fernmeldeleitungen.

Die Erfindung betrifft eine Einrichtung zum Ausgleich
unterschiedlichen Dämpfungsverhaltens von Fernmeldeleitungen, insbesondere Fernverbindungsleitungen. Fernsprechleitungen weisen gegenüber den Sprechfrequenzen
ein unterschiedliches Dämpfungsverhalten auf, das durch
entsprechende Verstärkung ausgeglichen werden muß.
Soweit diese Verstärker jeweils einer bestimmten Leitung
zugeordnet sind, läßt sich die Verstärkung der jeweils
gegebenen Dämpfung anpassen. In manchen Fällen, insbesondere wenn ein Ferngespräch zu einem anderen Teilnehmer umgeleitet werden soll, ist aber diese eindeutige
Zuordnung zwischen Verstärker und Leitung nicht mehr
gegeben. Es treffen also an der Vermittlungsstelle sehr
unterschiedlich gedämpfte Sprachpegel ein, die in angemessener Weise verstärkt werden müssen. Sie dürfen aber
nicht zu stark verstärkt werden, da sonst Rückkopplungsschwingungen einsetzen, die einen Pfeifton verursachen
und damit die Verständigung unmöglich machen.

Es ist bekannt, zum Ausgleich des unterschiedlichen
Dämpfungsverhaltens für jede Sprechrichtung einen
steuerbaren Verstärker bzw. eine Reihe steuerbarer
Verstärker vorzusehen und das Übertragungsverhalten der
beiden in einer Gabelverstärkerschaltung angeordneten
Verstärker durch eine Steuereinrichtung zueinander
gegensinnig derart zu steuern, daß die Summe beider

- 2 -

Verstärkungen im logarithmischen Maß den zweifachen Minimalwert der Gabelübergangsdämpfung nicht übersteigt (DE-OS 30 46 488). Diese bekannte Anordnung hat den Nachteil, daß die an sich mögliche Verstärkung nicht voll ausgenutzt werden kann. Es muß dabei nämlich davon ausgegangen werden, daß die angeschlossenen Leitungen ein besonders ungünstiges Dämpfungsverhalten aufweisen können und die Verstärkung darf nur soweit erhöht werden, daß auch bei ungünstigem Dämpfungsverhalten keine Rückkopplungsschwingung einsetzt. In den meisten Fällen weisen aber die angeschlossenen Sprechleitungen ein Dämpfungsverhalten auf, das wesentlich günstiger ist als das angenommene ungünstigste Dämpfungsverhalten, d.h. in solchen Fällen könnte die Verstärkung noch weiter erhöht werden, ohne daß Störungen auftreten, wenn nur im Einzelfall bekannt wäre, wie das Dämpfungsverhalten der angeschlossenen Leitungen ist, bzw. bei welchem Verstärkungsgrad Rückkopplungsschwingungen einsetzten. Um die Dämpfung der jeweils angeschlossenen Leitungen zu messen und danach die Verstärkung zu bestimmen, wären sehr komplizierte Vorrichtungen erforderlich.

Die der Erfindung zugrunde liegende Aufgabe bestand darin, eine Einrichtung der eingangs erwähnten Art so auszubilden, daß die Verstärkung noch besser an das Dämpfungsverhalten der Fernmeldeleitung angepaßt werden und im Einzelfall wesentlich weiter erhöht werden kann als bei der bekannten Einrichtung.

Die Lösung dieser Aufgabe erfolgt erfindungsgemäß dadurch, daß zwischen den Gabelschaltungen der Gabelverstärkerschaltung eine Sensorschaltung angeordnet ist, durch welche die Verstärkung mindestens eines Verstärkers zuerst hochgesteuert und dann bei Einsetzen einer Rückkopplungsschwingung wieder um einen vorgegebenen

- 3 -

kleinen Betrag zurückgesteuert wird.

Die Erfindung geht dabei von der Erkenntnis aus, daß es genügt festzustellen, bei welcher Verstärkung eine Rückkopplungsschwingung einsetzt, um die optimale Einstellung der Verstärkung zu erreichen. Das Hochsteuern der Verstärkung durch den Sensor kann verhältnismäßig langsam erfolgen und beim Einsetzen einer Rückkopplungsschwingung wird die Verstärkung wieder um einen kleinen Betrag zurückgesteuert.

Nun hört beim Zurücksteuern der Verstärkung die einmal angestoßene Rückkopplungsschwingung in der Regel nicht sofort auf, sondern bleibt auch noch bei geringerer Verstärkung bestehen, bei der sie vorher noch nicht einsetzte. Um die Rückkopplungsschwingung, wenn sie einmal eingesetzt hat, zum Abreißen zu bringen, kann die Verstärkung mindestens eines Verstärkers zuerst kurzzeitig stark zurückgesteuert bzw. der Verstärker praktisch ausgeschaltet werden, wobei für diesen Vorgang einige Millisekunden genügen und dann wird die Verstärkung wieder auf einen Wert erhöht, der unter dem beim Einsetzen der Rückkopplungsschwingung erreichten Wert der Verstärkung liegt.

Die Erfindung ist auch anwendbar, bei Anordnungen, bei denen in an sich bekannter Weise die Verstärker der beiden Sprechrichtungen durch eine Steuereinrichtung gegensinnig zueinander gesteuert werden, wobei durch eine Spracherkennungsschaltung die Sprechrichtung festgestellt wird und die Verstärker der Sprechrichtung - aktive Richtung - auf den zur Verständigung erforderlichen Wert in Abhängigkeit vom Sprachpegel eingestellt werden, während die Verstärker der jeweils entgegengesetzten Richtung - passive Richtung - auf den Höchstwert

- 4 -

eingestellt werden, der möglich ist, um den Summenwert nicht zu überschreiten. Bei einer solchen Anordnung kann in jeder Sprechrichtung ein zusätzlicher Verstärker zwischen dem steuerbaren Verstärker einer Sprechrichtung und der Ausgangsgabelschaltung vorgesehen sein, wobei jeweils diese zusätzlichen Verstärker durch den Sensor zurückgesteuert werden, wenn eine Rückkopplungsschwingung einsetzt.

Um eine möglichst gute Sprachübertragung zu erreichen, kann auch, und dies ist insbesondere dann wichtig, wenn Fernmeldeleitungen mit ungünstigem Dämpfungsverhalten angeschlossen sind, daß Zurücksteuern der Verstärker auch nur an dem Verstärker der passiven Richtung vorgenommen werden. In diesem Fall sind die Verstärker der aktiven Richtung auf einen solchen Verstärkungsgrad eingestellt, daß entsprechend dem ankommenden Sprachpegel eine gute Sprachübertragung gewährleistet ist, während der Verstärker der passiven Richtung soweit heruntergeregelt wird, daß gerade keine Rückkopplungsschwingung mehr einsetzt.

In der Regel genügt es, den Verstärkungsgrad, wenn eine Rückkopplungsschwingung einsetzt, um einen sehr kleinen Betrag, etwa von 0,1 dB zurückzunehmen, um zu erreichen, daß kein Rückkopplungsschwingen mehr stattfindet. Da sich aber geringe Verminderungen des Rückkopplungsgrades sprachlich noch nicht auswirken, wird praktisch eine Verminderung des Verstärkungsgrades bis 1,5 dB ohne weiteres vorgenommen werden können.

Weiterhin kann es vorteilhaft sein, wenn die Kennlinien der Verstärker in einem vorgegebenen Frequenzbereich um einen vorgegebenen Betrag erhöht sind derart, daß eine

- 5 -

Rückkopplungsschwingung zuerst bei einer dieser Erhöhung entsprechenden Frequenz einsetzt und die Sensorschaltung auf diese Frequenz abgestimmt ist.

Auf diese Weise können Rückkopplungsschwingungen sicherer von einem lediglich erhöhten Sprachpegel unterschieden werden.

Eine besonders vorteilhafte Ausführungsform der erfindungsgemäßen Einrichtung ist in Patentanspruch 7 beschrieben.

Bei dieser Ausführungsform wird von der Erkenntnis ausgegangen, daß in den Fernmeldeleitungen hohe Frequenzen stärker gedämpft werden als tiefe Frequenzen. Um einen Ausgleich der Leitungsdämpfung im gesamten zu übertragenden Frequenzband, beispielsweise von 300 Hz bis 3,4 kHz zu erreichen, wird gemäß der weiteren Erfindung der Frequenzgang der Verstärker ebenso wie die Verstärkung selbst in Abhängigkeit vom ankommenden Sprachpegel verändert. Dabei wird vorausgesetzt, daß ein kleiner Sprachpegel gleichbedeutend mit einer großen Leitungsdämpfung ist. Da hierbei die erwähnte Sicherheitsbedingung eingehalten werden muß, gemäß der die Kreisverstärkung den kritischen Wert, bei dem es zum Schwingen infolge von Rückkopplungen kommt, nicht erreichen darf, ist eine Anhebung der Verstärkung bei hohen Frequenzen sowohl in der aktiven als auch in der passiven Richtung nicht möglich, ohne die Verstärkung im Hauptfrequenzbereich der Sprache zu stark herabzusetzen. Die Anhebung der hohen Frequenzen in der aktiven Richtung muß daher durch eine relative Absenkung der hohen Frequenzen in der passiven Richtung ausgeglichen werden.

- 6 -

Die gemeinsame Anwendung der Hochsteuerung der Verstärkung bis zum Einsetzen einer Rückkopplungsschwingung und die Veränderung des Frequenzgangs der Verstärkung ergeben eine optimale Anpassung der Verstärkung an das Dämpfungsverhalten der Fernmeldeleitung.

Im folgenden werden anhand der beigefügten Zeichnungen Ausführungsbeispiele für Einrichtungen nach der Erfindung näher erläutert.

Fig. 1 zeigt im Blockschaltbild eine erste Ausführungsform einer Einrichtung, bei der die Verstärker der beiden Richtungen in gleicher Weise durch den Sensor beeinflußt werden.

Fig. 2 zeigt eine zweite Ausführungsform einer Einrichtung, bei der die Verstärker der beiden Richtungen gegensinnig gesteuert werden und die Rückkopplung durch zusätzliche Verstärker vermieden wird.

Fig. 3 zeigt ein Kennlinienbild der sensorgesteuerten Verstärker bei der Einrichtung nach der Erfindung.

Die Fig. 4a bis 4d zeigen bei einer dritten Ausführungsform der Einrichtung den Frequenzgang der Verstärker bei verschiedenen Verstärkungsstufen.

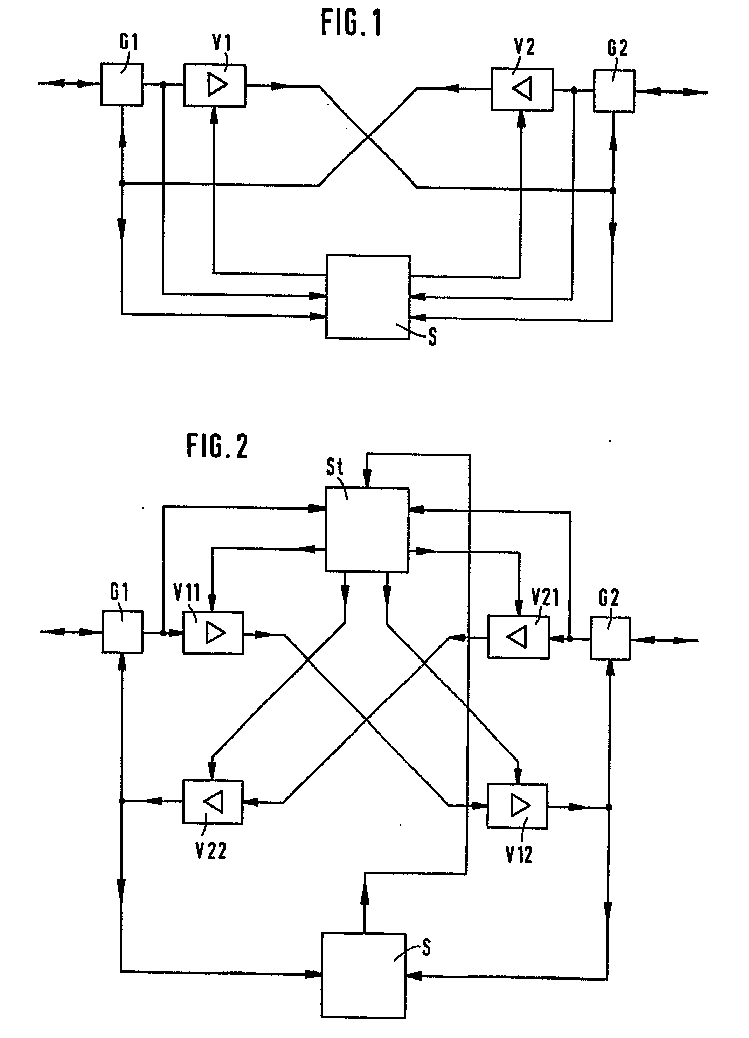

Die Einrichtung nach Fig. 1 besteht aus einer Gabelverstärkerschaltung mit den beiden Gabelschaltungen G1 und G2. Für die Sprechrichtung von G1 nach G2 ist ein Verstärker V1 und für die Sprechrichtung von G2 nach G1 ein Verstärker V2 vorgesehen, wobei diese Verstärker in an sich bekannter Weise mehrere Verstärkerstufen enthalten können. Zwischen den beiden Gabelschaltungen G1 und G2 liegt eine Sensorschaltung S, die anspricht, wenn in dem Kreis Rückkopplungsschwingungen auftreten. Wird eine Verbindung über die Einrichtung hergestellt, so wird durch die Sensorschaltung S zuerst bewirkt, daß der Verstärkungsgrad der Verstärker V1 und V2 verhältnismäßig langsam erhöht wird. Sobald eine Rückkopplungsschwingung einsetzt, steuert die Sensorschaltung S den Verstärkungsgrad der beiden Verstärker V1 und V2 wieder etwas zurück. Dabei kann zuerst kurzzeitig eine sehr starke Zurücksteuerung erfolgen, damit die Rückkopplungsschwingung mit Sicherheit zum Abreißen kommt und dann wird der Verstärkungsgrad wieder erhöht auf einen Verstärkungsgrad der etwas unter dem Verstärkungsgrad liegt, bei dem die Rückkopplungsschwingung einsetzte. Bei dieser Schaltung kann der Verstärker der jeweils aktiven Sprechrichtung auch fest eingestellt bleiben und nur der Verstärker der passiven Sprechrichtung zurückgesteuert werden, wozu eine in Fig. 1 nicht eigens dargestellte und z.B. innerhalb der Sensorschaltung S angeordnete Steuereinrichtung erforderlich ist, durch die jeweils die Sprechrichtung bestimmt werden kann, in dem der Steuereinrichtung das jeweils zwischen der Gabelschaltung G1 und dem Verstärker V1 oder der Gabelschaltung G2 und dem Verstärker V2 ankommende Eingangssignal zugeführt wird.

Die Änderung des Verstärkungsgrades erfolgt in nicht eigens beschriebener und an sich bekannter Weise durch entsprechende von der Sensorschaltung S den Verstärkern V1 und V2 zugeführte Steuersignale.

Eventuell auftretende Rückkopplungsschwingungen werden an den Ausgängen der beiden Verstärker V1 bzw. V2 festgestellt und der Sensorschaltung S zugeführt.

- 8 -

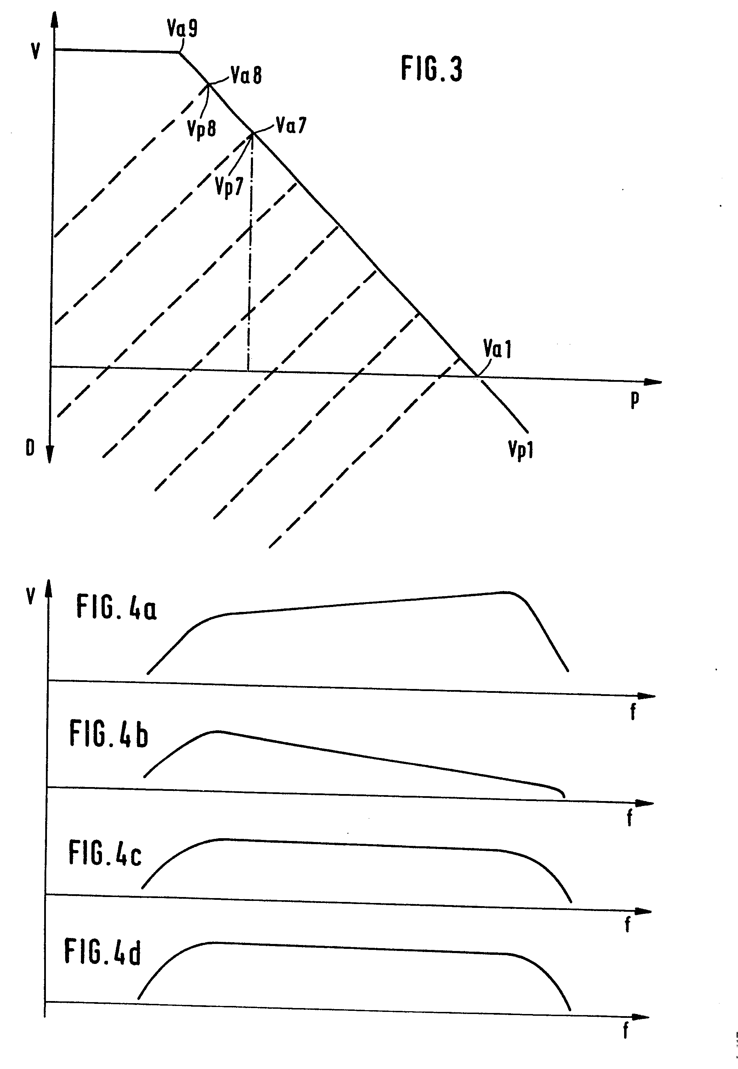

Die Änderung des Verstärkungsgrades kann in analoger oder digitaler Weise erfolgen. Die hierbei auftretenden Kennlinien werden weiter unten anhand von Fig. 3 beschrieben.

Bei der Einrichtung nach Fig. 2 wird von einer an sich bekannten Anordnung ausgegangen, bei der wie in Fig. 1 ein Verstärker V11 der Sprechrichtung von G1 nach G2 und ein Verstärker V21 der Sprechrichtung von G2 nach G1 zugeordnet ist. Eine Steuereinrichtung St ermittelt in bekannter Weise die jeweilige Sprechrichtung aus den zwischen G1 und V11 bzw. G2 und V21 abgenommenen Signalen und schaltet den Verstärker V11 der aktiven Sprechrichtung in Abhängigkeit vom Sprachpegel auf den zur Verständigung günstigen Wert, den Verstärker V21 gegensinnig auf einen geringeren Verstärkungsgrad oder auf Dämpfung. Zusätzlich sind nun noch zwei weitere Verstärker V12 und V22 vorgesehen und diese Verstärker werden von der Sensorschaltung S beeinflußt. Da schon eine Sprachsteuerung vorhanden ist, werden zweckmäßig in diesem Fall nicht die beiden Verstärker V12 und V22 bei Einsetzen einer an ihren Ausgängen festgestellten Rückkopplungsschwingung zurückgesteuert, sondern nur der Verstärker der passiven Sprechrichtung. Wenn also beispielsweise die Sprechrichtung von G1 nach G2 angenommen wird, so wird der Verstärker V11 und der Verstärker V12 auf einen geeigneten Verstärkungsgrad eingestellt. Der Verstärker V22, der in der passiven Richtung liegt, wird nun hochgesteuert bis Rückkopplung einsetzt und dann wieder etwas zurückgesteuert. Dadurch wird erreicht, daß in der passiven Richtung stets die höchstmögliche Verstärkung vorhanden ist, bei der noch keine Gefahr besteht, daß eine Rückkopplungsschwingung einsetzt. Es kann also durchaus der Fall eintreten, daß auch in der passiven Richtung durch die zusätzlichen Verstärker V12 bzw. V22 noch eine zusätzliche Verstärkung und keine Dämpfung erfolgt.

In Fig. 3 sind Kennlinien von Verstärkern dargestellt, wie sie in den Einrichtungen nach Fig. 1 und Fig. 2 angeordnet sind. Dabei ist jeweils der Verstärkungsgrad V in Abhängigkeit vom Eingangspegel P aufgetragen. Die Kennlinie des Verstärkers in der aktiven Richtung ist in ausgezogener Linie dargestellt, während die gegensinnig verlaufenden Zweige der Kennlinien für die passive Richtung gestrichelt dargestellt sind.

In der aktiven Richtung steigt der Verstärkungsgrad V bei abnehmendem Eingangspegel P vom Punkt Va1 an bis zu einem Maximalwert beim Punkt Va9. In der passiven Richtung wird der Verstärkungsgrad V zunächst vom Punkt Vp1 ausgehend mit angehoben bis mittels der Sensorschaltung das Einsetzen von Rückkopplungsschwingungen festgestellt wird. Dies sei z.B. der Punkt Vp7. Die sich an diesem Punkt ergebende Verstärkung ist gemäß der Bedingung V (max) = V (aktiv) + V (passiv) die für die betreffende Verbindung maximale Verstärkung. Dann wird in der passiven Richtung der Ver - stärkungsgrad wieder abgesenkt und verläuft auf einem der gestrichelt eingezeichneten Zweige der Kennlinie, deren in Fig. 3 angedeutete Abstände sich nach den praktischen Gegebenheiten richten.

Gleichzeitig mit dem Hochsteuern der beiden Verstärker in der aktiven und passiven Richtung durch die Sensorschaltung kann in an sich bekannter Weise der Frequenzgang der beiden Verstärker beeinflußt werden. Dies ist in den Fig. 4a bis 4d dargestellt. Dabei ist jeweils der Verstärkungsgrad V gegen die Frequenz f aufgetragen.

Während bei hohem Eingangspegel P und geringem Verstärkungsgrad, also etwa am Punkt Pa1 und Pp1 in Fig. 3, bei den Verstärkern in den beiden Richtungen ein normaler Frequenzgang vorliegt wie er in den Fig. 4c bzw. 4d dargestellt ist, wird beim Hochsteuern der Verstärkung der Frequenzgang beeinflußt, so daß beispielsweise am Punkt Pa8 der aktiven Richtung der in Fig. 4a dargestellte Frequenzgang und am Punkt Pp8 der passiven Richtung der in Fig. 4b dargestellte Frequenzgang vorliegt. Wie aus den Fig. 4a und 4b zu ersehen, ist an diesen Punkten die Verstärkung in der aktiven Richtung bei höheren Frequenzen gegenüber der Verstärkung bei niedrigeren Frequenzen angehoben, während in der passiven Richtung die Verstärkung bei höheren Frequenzen gegenüber der Verstärkung bei niedrigeren Frequenzen abgesenkt ist. Dies bedeutet, daß in der aktiven Richtung die Verstärkung der hohen Frequenzen stärker angehoben ist als die Verstärkung der niedrigen Frequenzen, während in der passiven Richtung die Verstärkung der hohen Frequenzen weniger stark angehoben wird als die Verstärkung der niedrigen Frequenzen.

Bei der in Fig. 2 dargestellten Einrichtung erfolgt die Änderung des Frequenzgangs, gesteuert von dem zwischen G1 und V11 bzw. G2 und V21 gemessenen Eingangspegel P durch die Steuereinrichtung St an den Verstärkern V11, V21 und/oder den Verstärkern V12, V22.

Das mit der Einrichtung erzielbare Ergebnis ist, daß bei, bezüglich ihres Dämpfungsverhaltens, guten Fernsprechleitungen nicht nur in der aktiven Richtung, sondern auch in der passiven Richtung eine gute Übertragung stattfindet, d.h. daß der gerade sprechende Teilnehmer auch Geräusche von dem anderen Teilnehmer hört und dadurch vermieden wird, daß der Sprechende das Gefühl hat, daß er ins Leere spricht. Nur bei sehr großer Leitungsdämpfung kann es vorkommen, daß, um die Rückkopplungsschwingung zu vermeiden, der Verstärker in

- 11 -

der passiven Richtung stark herabgesetzt werden muß, also dämpfend wirkt. Dieser Fall tritt jedoch nur sehr selten auf bei Leitungen mit ausgesprochen schlechten Dämpfungseigenschaften, während er bei den bekannten Anordnungen viel häufiger auftritt, nämlich immer dann, wenn mit Rücksicht auf die Verstärkung in der aktiven Sprechrichtung die passive Sprechrichtung stark gedämpft werden muß, um den festgelegten Summenwert nicht zu überschreiten.

Grundsätzlich ist es mit der beschriebenen Einrichtung sogar möglich, die Verstärkung in der passiven Richtung stärker anzuheben als in der aktiven Richtung solange keine Rückkopplungsschwingung einsetzt.

-7-

Patentansprüche.

1. Einrichtung zum Ausgleich unterschiedlichen Dämpfungsverhaltens von Fernmeldeleitungen, insbesondere Fernverbindungsleitungen, bei der für jede Sprechrichtung ein steuerbarer Verstärker vorgesehen ist, wobei die Verstärker in einer Gabelverstärkerschaltung angeordnet sind, dadurch gekennzeichnet, daß zwischen den Gabelschaltungen (G1, G2) der Gabelverstärkerschaltung eine Sensorschaltung (S) angeordnet ist, durch welche die Verstärkung mindestens eines Verstärkers (V1, V2) zuerst hochgesteuert und dann bei Einsetzen einer Rückkopplungsschwingung wieder um einen vorgegebenen kleinen Betrag zurückgesteuert wird.

2. Einrichtung nach Anspruch 1, dadurch gekennzeichnet, daß beim Einsetzen der Rückkopplungsschwingung die Verstärkung mindestens eines Verstärkers (V1, V2) kurzzeitig stark zurückgesteuert oder der Verstärker ausgeschaltet wird und dann die Verstärkung wieder auf einen Wert hochgesteuert wird, der um einen kleinen vorgegebenen Betrag unter dem Wert liegt, bei dem die Rückkopplungsschwingung einsetzte.

3. Einrichtung nach Anspruch 1 oder 2, dadurch gekennzeichnet, daß für jede Sprechrichtung zwei hintereinander in der Gabelverstärkerschaltung angeordnete steuerbare Verstärker (V11, V12, V21, V22) vorgesehen sind und bei einem ersten, den beiden Sprechrichtungen zugeordneten Verstärkerpaar (V11, V21) durch eine Steuereinrichtung (St) in Abhängigkeit von der Sprechrichtung und dem ankommenden Sprachpegel die Verstärkung gegensinnig gesteuert wird, während bei dem zweiten, den beiden Sprechrichtungen zugeordneten Verstärkerpaar (V12, V22) die Verstärkung durch die Sensorschaltung (S) gesteuert wird.

4. Einrichtung nach einem der Ansprüche 1 bis 3, dadurch gekennzeichnet, daß durch die Sensorschaltung (S) jeweils nur der Verstärker (V22 bzw. V12) der passiven Richtung bei Einsetzen einer Rückkopplungsschwingung zurückgesteuert wird.

5. Einrichtung nach einem der Ansprüche 1 bis 4, dadurch gekennzeichnet, daß die Verstärker (V1, V2 bzw. V22, V12) bzw. der Verstärker der passiven Richtung bei Einsetzen einer Rückkopplungsschwingung um 0,1 bis 1,5 dB zurückgesteuert werden.

6. Einrichtung nach einem der Ansprüche 1 bis 5, dadurch gekennzeichnet, daß die Kennlinien der Verstärker in einem vorgegebenen Frequenzbereich um einen vorgegebenen Betrag erhöht sind derart, daß eine Rückkopplungsschwingung zuerst bei einer dieser Erhöhung entsprechenden Frequenz einsetzt und die Sensorschaltung (S) auf diese Frequenz abgestimmt ist.

7. Einrichtung nach einem der Ansprüche 1 bis 6, dadurch gekennzeichnet, daß in Abhängigkeit vom ankommenden Sprachpegel die Verstärkung derart hochgesteuert wird, daß beim Verstärker (V1, V2) der aktiven Richtung die Verstärkung der hohen Frequenzen stärker angehoben wird als die Verstärkung der niedrigen Frequenzen, während beim Verstärker (V2, V1) der passiven Richtung die Verstärkung der hohen Frequenzen weniger stark angehoben wird als die Verstärkung der niedrigen Frequenzen.

1/2

FIG.1

FIG.2

0099013

2/2

FIG.3

FIG.4a

FIG.4b

FIG.4c

FIG.4d